# EUROPEAN PATENT APPLICATION

(11) **EP 3 901 443 A1**
(43) Date of publication of application: **27.10.2021**
(21) Application number: 21163849.9
(22) Date of filing: 22.03.2021
(51) Int. Cl.: F02F 1/00

(54) **COMBUSTION CHAMBER STRUCTURE FOR ENGINE, CYLINDER BLOCK AND ENGINE**

(30) Priority: 24.04.2020 JP 2020077270
(71) Applicant: MAZDA MOTOR CORPORATION, Hiroshima 730-8670 (JP)
(72) Inventor: NOU, Yoshihisa, Fuchu-cho, Aki-gun,, Hiroshima 730-8670 (JP); AOKI, Osamu, Fuchu-cho, Aki-gun,, Hiroshima 730-8670 (JP); HARADA, Yuji, Fuchu-cho, Aki-gun,, Hiroshima 730-8670 (JP); UCHIDA, Kenji, Fuchu-cho, Aki-gun,, Hiroshima 730-8670 (JP); GE, Xiyao, Fuchu-cho, Aki-gun,, Hiroshima 730-8670 (JP)
(74) Representative: Müller-Boré & Partner Patentanwälte PartG mbB

(57) **Abstract**

A cylinder block includes: a block body that has a cylinder inner wall surface; and a coat layer that covers the cylinder inner wall surface. The coat layer includes: a heat-shielding layer that covers an upper end region of the cylinder inner wall surface, a piston ring not slidingly contacting the upper end region; a heat-insulating layer arranged on a back surface side of the heat-shielding layer; and a heat diffusion layer arranged between the heat-insulating layer and the heat-shielding layer. The thermal conductivity of the heat-insulating layer is lower than that of the block body, the thermal conductivity of the heat-shielding layer is lower than those of the block body and the heat-insulating layer, and the thermal conductivity of the heat diffusion layer is higher than those of the heat-insulating layer and the heat-shielding layer. The heat diffusion layer abuts the block body.

## Description

### [Technical Field]

The present invention relates to a combustion chamber structure for an engine, particularly a combustion chamber structure including a heat-shielding layer that suppresses cooling loss. The present invention also relates to a cylinder block for an engine, and an engine.

### [Background Art]

A combustion chamber in a vehicular gasoline engine or the like is requested to reduce heat dissipation (cooling loss) through a wall surface of the combustion chamber. In order to reduce the cooling loss, a technique of coating the wall surface of the combustion chamber, such as a crown surface of a piston, with a heat-shielding layer that is formed from a material with low thermal conductivity is known. By providing the heat-shielding layer, a temperature difference between combustion gas, which is produced in the combustion chamber, and the wall surface of the combustion chamber can be reduced, and the cooling loss can thereby be reduced.

In Patent document 1, a combustion chamber structure that is provided with a heat-insulating layer on the crown surface of the piston in addition to the heat-shielding layer is disclosed. The heat-shielding layer covers the entire crown surface of the piston and suppresses the heat dissipation through a piston body. The heat-insulating layer is arranged below the heat-shielding layer and in a radially-center region of the crown surface of the piston, and sets the center region as a region from which heat is less likely to be dissipated. As a result, such temperature distribution is provided that a radially-center region of the combustion chamber is at a relatively high temperature and a radially-outer region thereof is at a relatively low temperature. Such temperature distribution has an advantage of slowing combustion at the time when Homogeneous-Charge Compression Ignition (HCCI) combustion is conducted, so as to be able to suppress a rapid increase in an in-cylinder pressure and the cooling loss.

### [Prior Art Documents]

### [Patent documents]

[Patent document 1] JP-A-2018-172997

### [Summary]

### [Problem to be Solved]

The combustion chamber in the engine is also defined by a cylinder inner wall surface of a cylinder block. Accordingly, in order to reduce the cooling loss in the combustion chamber, it is also necessary to suppress the heat dissipation from the cylinder inner wall surface. Thus, it is considered to also provide the heat-shielding layer and the heat-insulating layer to the cylinder inner wall surface as in Patent document 1. However, such a defect possibly occurs that the heat-insulating layer stores excess heat, which raises a temperature of the cylinder inner wall surface to a high temperature. That is, the heat-insulating layer stores the heat that cannot be blocked by the heat-shielding layer, and the heat-insulating layer that keeps the high temperature heats the heat-shielding layer. Due to this heating, the temperature of the cylinder inner wall surface is raised to the high temperature, which raises an in-cylinder temperature. As a result, air that is introduced in an intake stroke is heated excessively, which causes preignition in a compression stroke.

The present invention has a purpose of suppressing a temperature rise in a cylinder inner wall surface to a high temperature, which possibly causes preignition, while reducing cooling loss.

### [Means for solving the Problem]

A combustion chamber structure for an engine according to an aspect of the present invention is a combustion chamber structure for an engine that includes a combustion chamber defined by a cylinder block, a cylinder head, and a piston. The cylinder block includes a block body having a cylinder inner wall surface that opposes the combustion chamber. The combustion chamber or the cylinder block includes: a heat-shielding layer that at least covers an upper end region of the cylinder inner wall surface, a piston ring held by a side circumferential surface of the piston not slidingly contacting the upper end region; a heat-insulating layer that is arranged in a region, which is covered with the heat-shielding layer, in the cylinder inner wall surface; and a heat diffusion layer that is arranged between the heat-insulating layer and the heat-shielding layer. Thermal conductivity of the heat-insulating layer is lower than that of the block body, thermal conductivity of the heat-shielding layer is lower than that of the block body and the heat-insulating layer, and thermal conductivity of the heat diffusion layer is higher than that of the heat-insulating layer and the heat-shielding layer. Particularly, a thermal conductivity of the heat-insulating layer is lower than a thermal conductivity of the block body. A thermal conductivity of the heat-shielding layer is lower than the thermal conductivity of the block body and the thermal conductivity of the heat-insulating layer. A thermal conductivity of the heat diffusion layer is higher than the thermal conductivity of the heat-insulating layer and the thermal conductivity of the heat-shielding layer. The heat diffusion layer includes an abutment portion that abuts the block body.

According to this combustion chamber structure, at least the upper end region of the cylinder inner wall surface is covered with the heat-shielding layer, the thermal conductivity of which is lower than that of the block body of the cylinder block and the heat-insulating layer. Thus, a temperature difference between the block body and the combustion chamber can be reduced, and heat transfer (cooling loss) to the block body can thereby be reduced. In addition, the heat-insulating layer stores heat that has passed the heat-shielding layer. Thus, the heat-shielding layer can be maintained at a high temperature. Meanwhile, the heat diffusion layer is interposed between the heat-insulating layer and the heat-shielding layer. The heat diffusion layer includes the abutment portion that has the higher thermal conductivity than both of the heat-insulating layer and the heat-shielding layer and that abuts the block body. Thus, even when the heat-insulating layer is brought into a state of excessively storing the heat, such heat can be dissipated to the block body through the heat diffusion layer. Therefore, it is possible to prevent a temperature rise of the cylinder inner wall surface to the high temperature, which possibly causes preignition.

In the combustion chamber structure for the engine, the heat diffusion layer desirably includes an extending portion that extends in a cylinder-axis direction from the heat-insulating layer, and the extending portion is desirably the abutment portion that abuts the block body.

According to this combustion chamber structure, compared to a case where the heat diffusion layer and the heat-insulating layer are in the same size and a side edge portion of the heat diffusion layer is the abutment portion with the block body, it is possible to increase a contact area between the heat diffusion layer and the block body by the extending portion. Therefore, the heat of the heat-insulating layer can further easily be released to the block body.

In the combustion chamber structure for the engine, the heat-insulating layer and the heat diffusion layer are desirably provided for an entire length in a circumferential direction of the cylinder inner wall surface.

According to this combustion chamber structure, a structure capable of dissipating the heat of the heat-insulating layer through the heat diffusion layer for an entire circumference of the cylinder inner wall surface can be adopted.

In the combustion chamber structure for the engine, such a structure can be adopted that the cylinder block includes plural cylinders aligned in a specified direction, an intermediate wall is provided between the adjacent cylinders. Particularly, in the circumferential direction of the cylinder inner wall surface, two layers of the heat-shielding layer and the heat diffusion layer are arranged in a region of the intermediate wall, and three layers of the heat-shielding layer, the heat-insulating layer, and the heat diffusion layer are arranged in a region other than the intermediate wall.

The intermediate wall that is arranged between the cylinders is a wall, a temperature of which is naturally raised to the high temperature due to heat from the two cylinders. The heat-shielding layer that is arranged on a surface of such an intermediate wall is naturally maintained at the high temperature. Accordingly, it is possible to adopt the combustion chamber structure having functions of maintaining the heat and dissipating the heat according to actual heat distribution in the cylinder block by providing a two-layer coat of the heat-shielding layer and the heat diffusion layer without providing the heat-insulating layer in the region of the intermediate wall and by providing a three-layer coat of the heat-insulating layer, the heat-shielding layer, and the heat diffusion layer in the region other than the intermediate wall.

In the combustion chamber structure for the engine, the cylinder block desirably includes plural cylinders that are aligned in a specified direction, an intermediate wall is desirably provided between the adjacent cylinders. Particularly, a coolant passage is desirably provided in the intermediate wall, and the heat diffusion layer desirably includes a heat dissipating portion that covers the periphery of the coolant passage.

According to this combustion chamber structure, the heat diffusion layer can dissipate heat received from the heat-insulating layer to a coolant flowing through the coolant passage through the heat dissipating portion. Therefore, the intermediate wall, a temperature of which is easily raised excessively, between the cylinders can be maintained at an appropriate temperature.

In the combustion chamber structure for the engine, the cylinder block desirably includes plural cylinders that are aligned in a specified direction, an intermediate wall is provided between the adjacent cylinders. Particularly, the heat diffusion layer desirably has such a shape that, in the region of the intermediate wall, a contact area of the abutment portion with the block body is larger than that in the region other than the intermediate wall.

According to this combustion chamber structure, it is possible to improve heat dissipation ability of the abutment portion in the region of the intermediate wall between the cylinders. Therefore, the intermediate wall, the temperature of which is easily raised excessively, between the cylinders can be maintained at the appropriate temperature.

Particularly, an engine includes a cylinder block, a cylinder head, a piston and the above combustion chamber structure.

Further particularly, a cylinder block for an engine having a combustion chamber that is defined by the cylinder block, a cylinder head, and a piston is provided. The cylinder block includes a block body having a cylinder inner wall surface configured to oppose the combustion chamber, a heat-shielding layer configured to at least cover an end region of the cylinder inner wall surface, a heat-insulating layer that is arranged in a region, which is covered with the heat-shielding layer, in the cylinder inner wall surface (2S), and a heat diffusion layer that is arranged between the heat-insulating layer and the heat-shielding layer. A thermal conductivity of the heat-insulating layer is lower than a thermal conductivity of the block body. A thermal conductivity of the heat-shielding layer is lower than the thermal conductivity of the block body and the thermal conductivity of the heat-insulating layer. A thermal conductivity of the heat diffusion layer is higher than the thermal conductivity of the heat-insulating layer and the thermal conductivity of the heat-shielding layer. The heat diffusion layer includes an abutment portion configured to abut the block body.

Further particularly, an engine includes the above cylinder block, a cylinder head, a piston and a combustion chamber.

### [Advantage of the invention]

According to the present invention, it is possible to provide the combustion chamber structure for the engine capable of suppressing the temperature rise of the cylinder inner wall surface to the high temperature, which possibly causes the preignition, while reducing the cooling loss.

### [Brief Description of the Drawings]

[Fig. 1] Fig. 1 is a schematic cross-sectional view illustrating an engine to which a combustion chamber structure for an engine according to an embodiment of the present invention is applied.
[Fig. 2] Fig. 2 is a top view of a cylinder block according to a first embodiment.
[Fig. 3] Fig. 3A is a schematic view illustrating a coat layer that is provided to a cylinder inner wall surface in a comparative example, and Fig. 3B is a view for illustrating preignition that possibly occurs in the comparative example.
[Fig. 4] Fig. 4 is a cross-sectional view that is taken along line IV-IV in Fig. 2.
[Fig. 5] Fig. 5 is an enlarged view of a section surrounded by a broken line A in Fig. 2.
[Fig. 6] Fig. 6 is an enlarged view of a section surrounded by a broken line B in Fig. 4 and is a cross-sectional view that is taken along line VI-VI in Fig. 5.
[Fig. 7] Fig. 7 is a cross-sectional view illustrating a region where the coat layer is formed in the cylinder inner wall surface.
[Fig. 8] Fig. 8 is an enlarged view of a section C in Fig. 4.
[Fig. 9] Fig. 9A is an enlarged view of a section D in Fig. 4, Fig. 9B is a cross-sectional view that is taken along line IXB-IXB in Fig. 9A, and Fig. 9C is a cross-sectional view that is taken along line IXC-IXC in Fig. 9A.
[Fig. 10] Fig. 10 is a view in a table format listing materials that can be applied as a constituent of the combustion chamber structure for the engine.
[Fig. 11] Fig. 11 is a top view of a cylinder block according to a second embodiment.
[Fig. 12] Fig. 12 is a cross-sectional view that is taken along line XII-XII in Fig. 11.
[Fig. 13] Fig. 13A is an enlarged cross-sectional view of a main section in Fig. 12, Fig. 13B is a cross-sectional view that is taken along line XIIIB-XIIIB in Fig. 13A, and Fig. 13C is a cross-sectional view that is taken along line XIIIC-XIIIC in Fig. 13A.
[Fig. 14] Fig. 14 is a cross-sectional view of a cylinder block according to a third embodiment.

### [Embodiments for Carrying Out the Invention]

### [Overall Configuration of Engine]

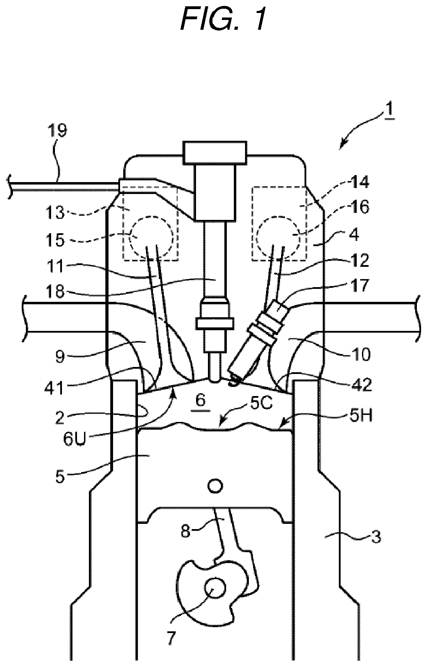

A detailed description will hereinafter be made on a combustion chamber structure for an engine according to an embodiment of the present invention with reference to the drawings. All of the features as shown in the drawings may not necessarily be essential. Fig. 1 is a schematic cross-sectional view illustrating an engine to which the combustion chamber structure or the cylinder block for the engine according to the embodiment of the present invention is applied. The engine illustrated herein is particularly an engine that includes one or more cylinders and one or more piston and is mounted, as a power source for travel driving of a vehicle such as an automobile, on the vehicle. The engine particularly includes an engine body 1 and auxiliary machines such as intake and exhaust manifolds and various pumps that are not illustrated and are assembled thereto.

The engine body 1 in this embodiment is particularly an engine that can conduct: spark ignition combustion (SI combustion) in which air-fuel mixture of fuel and air is ignited by a spark in a combustion chamber; and Homogeneous Charge Compression Ignition (HCCI) combustion in which the air-fuel mixture is self-ignited. The fuel that is supplied to the engine body 1 particularly has gasoline as a main constituent. In general, in the engine body 1, the SI combustion is particularly conducted, but not limited, in a high-load or high-speed operation range, and the HCCI combustion is particularly conducted, but not limited, in a low-to-middle load and low-to-middle speed operation range. The present invention can also be applied to a combustion chamber for an engine in which the HCCI combustion cannot be conducted.

The engine body 1 includes a cylinder block 3, a cylinder head 4, and a piston 5. The cylinder block 3 has one or plural cylinders 2 (only one thereof is illustrated in Fig. 1) that are aligned in a perpendicular direction to the sheet of Fig. 1. The cylinder head 4 is attached to an upper surface of the cylinder block 3 and closes an upper opening of the cylinder 2. The piston 5 is particularly accommodated in each of the cylinders 2 in a slidably reciprocating manner and is coupled to a crankshaft 7 via a connecting rod 8. The crankshaft 7 rotates about a center axis thereof according to reciprocating motion of the piston 5. A crown surface 5H of the piston 5 is particularly formed with a cavity 5C that is dented downward in a cylinder-axis direction.

A combustion chamber 6 is particularly formed above the piston 5. The cylinder head 4 is formed with an intake port 9 and an exhaust port 10, each of which communicates with the combustion chamber 6. A lower surface (a combustion chamber ceiling surface 6U) of the cylinder head 4 is formed with, as openings to the combustion chamber 6, an intake-side opening 41 that is a downstream end of the intake port 9 and an exhaust-side opening 42 that is an upstream end of the exhaust port 10.

An intake valve 11 for opening and/or closing the intake-side opening 41 and an exhaust valve 12 for opening and/or closing the exhaust-side opening 42 are assembled to the cylinder head 4. The engine body 1 of this embodiment is particularly a double overhead camshaft (DOHC) engine, two each of the intake-side openings 41 and the exhaust-side openings 42 are provided to each of the cylinders 2, and two each of the intake valves 11 and the exhaust valves 12 are also provided thereto.

The combustion chamber 6 is defined by the cylinder block 3, the cylinder head 4, and the piston 5. In detail, combustion chamber wall surfaces that define the combustion chamber 6 are an inner wall surface of the cylinder 2, the crown surface 5H as an upper surface of the piston 5, the combustion chamber ceiling surface 6U as the lower surface of the cylinder head 4, and an umbrella portion of each of the intake valve 11 and the exhaust valve 12.

In the cylinder head 4, an intake-side valve mechanism 13 and an exhaust-side valve mechanism 14 that respectively drive the intake valve 11 and the exhaust valve 12 are particularly disposed. These valve mechanisms 13, 14 respectively drive shaft portions of the intake valve 11 and the exhaust valve 12 in an interlocking manner with rotation of the crankshaft 7. By this driving, a valve head of the intake valve 11 opens and/or closes the intake-side opening 41, and a valve head of the exhaust valve 12 opens/closes the exhaust-side opening 42.

An intake-side variable valve timing mechanism (an intake-side S-VT) 15 is particularly assembled to the intake-side valve mechanism 13. The intake-side S-VT 15 is an electric S-VT that is provided to an intake camshaft, and changes opening/closing timing of the intake valve 11 by continuously changing a rotation phase of the intake camshaft with respect to the crankshaft 7 within a specified angle range. Similarly, an exhaust-side variable valve timing mechanism (an exhaust-side S-VT) 16 is particularly assembled to the exhaust-side valve mechanism 14. The exhaust-side S-VT 16 is an electric S-VT that is provided to an exhaust camshaft, and changes opening/closing timing of the exhaust valve 12 by continuously changing a rotation phase of the exhaust camshaft with respect to the crankshaft 7 within a specified angle range.

An ignition plug 17 that supplies ignition energy to the air-fuel mixture in the combustion chamber 6 is particularly provided per cylinder 2 and attached to the cylinder head 4. The ignition plug 17 is attached to the cylinder head 4 in such a posture that, at a position near a radial center of the combustion chamber ceiling surface 6U, an ignition portion thereof faces inside of the combustion chamber 6. The ignition plug 17 produces a spark from a tip thereof in response to supply of electricity from an ignition circuit, which is not illustrated, so as to ignite the air-fuel mixture in the combustion chamber 6. In this embodiment, the ignition plug 17 is used when the SI combustion is conducted under high load and at the high speed. The ignition plug 17 is also used in the case where the HCCI combustion is conducted and the self-ignition is difficult like a time immediately after a cold start of the engine, in the case where the HCCI combustion is assisted under specified load or under a specified speed condition (spark assist), or the like.

An injector 18 that injects the fuel having gasoline as the main constituent into the combustion chamber 6 from a tip is provided per cylinder 2 and attached to the cylinder head 4. The injector 18 is arranged in a radially center space of the combustion chamber ceiling surface 6U. A fuel supply pipe 19 is particularly connected to the injector 18. The injector 18 injects the fuel, which is supplied through the fuel supply pipe 19, into the cavity 5C. A high-pressure fuel pump (not illustrated) that is constructed of a plunger pump or the like is connected to an upstream side of the fuel supply pipe 19, and the plunger pump is coupled to the crankshaft 7 in an interlocking manner.

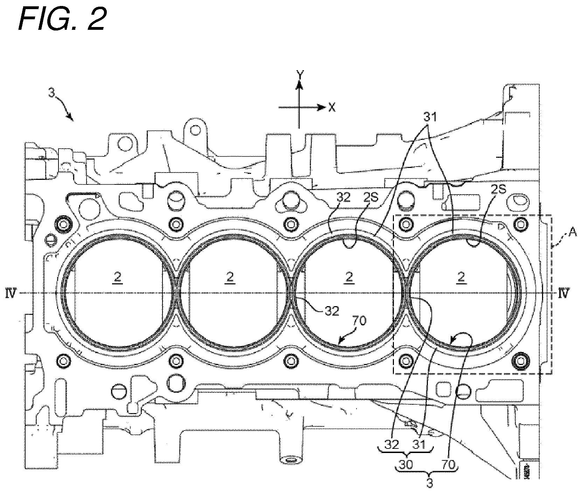

Fig. 2 is a top view of the cylinder block 3 according to a first embodiment. In Figs. 2 and some of the drawings, which will be described below, X, Y, Z-directions are indicated. The X-direction is an extending direction of the crankshaft 7, the Y-direction is a direction in which the intake port 9 and the exhaust port 10 oppose each other (a cross-sectional direction in Fig. 1), and the Z-direction is the cylinder-axis direction (a vertical direction).

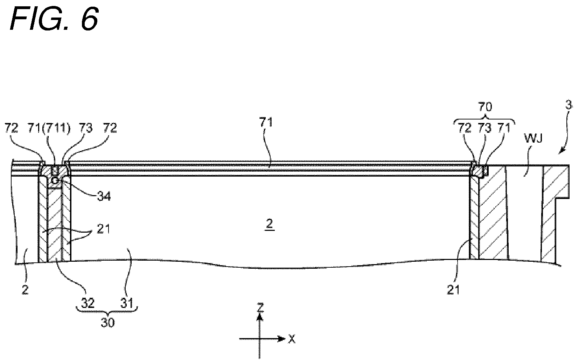

The cylinder block 3 particularly includes the four cylinders 2 that are aligned in the X-direction (the plural cylinders aligned in a specified direction). The piston 5 is slidably accommodated in each of the cylinders 2. The cylinder block 3 includes: a block body 30 having a cylinder inner wall surface 2S that defines a space of each of the columnar cylinders 2; and a coat layer 70 that covers an upper end region of the cylinder inner wall surface 2S. A liner 21 (see Fig. 6 to Fig. 9) is particularly mounted to the cylinder inner wall surface 2S at a position below the coat layer 70.

The block body 30 particularly includes, as walls for forming the cylinder inner wall surface 2S, a peripheral wall 31 (a region other than an intermediate wall) and an intermediate wall 32. The peripheral wall 31 is a wall that forms a large part of the cylindrical cylinder inner wall surface 2S. The intermediate wall 32 is a so-called inter-bore wall, and is a wall that is formed between the two adjacent cylinders 2. Of the four cylinders 2, the two center cylinders 2 each have the intermediate wall 32 on one side and the other side in the X-direction and have the peripheral wall 31 in a remaining portion. The two outer cylinders 2 each have the intermediate wall 32 only on one side in the X-direction and have the peripheral wall 31 in a remaining portion.

The coat layer 70 is arranged to suppress heat dissipation (cooling loss) from the upper end region of the cylinder inner wall surface 2S, that is, a region where the liner 21 is not arranged. Thus, in order to reduce a temperature difference from combustion gas in the combustion chamber 6, the coat layer 70 has a function of maintaining a temperature of the coat layer 70 and a function of dissipating the heat to prevent an excessive temperature rise of the coat layer 70 to the high temperature.

### [Combustion Chamber Structure in Comparative Example]

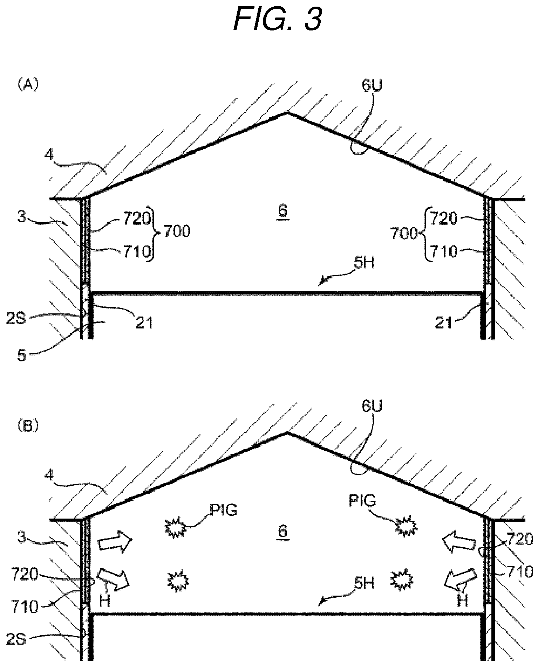

Prior to the description on the combustion chamber structure according to the embodiment of the present invention, a description will be made on a combustion chamber structure according to a comparative example. Fig. 3A is a cross-sectional view that schematically illustrates the combustion chamber structure according to the comparative example. The cylinder block 3 includes a coat layer 700 that is arranged in the upper end region of the cylinder inner wall surface 2S. In the cylinder inner wall surface 2S, the coat layer 700 is coated on a region where a side peripheral wall of the piston 5 does not slidingly contact. The liner 21 is mounted to the cylinder inner wall surface 2S at a position below the coat layer 700.

The coat layer 700 is constructed of: a heat-insulating layer 710 that is formed to cover an entire circumference of the upper end region of the cylinder inner wall surface 2S; and a heat-shielding layer 720 that is formed on the heat-insulating layer 710. The heat-shielding layer 720 includes a coating layer that is formed from a material such as a heat-resistant silicone resin and has sufficiently low thermal conductivity with respect to a base material for the cylinder block 3. The heat-insulating layer 710 is formed from a member with high volume specific heat and has a heat storage property. The heat-shielding layer 720 is exposed to the inside of the combustion chamber 6.

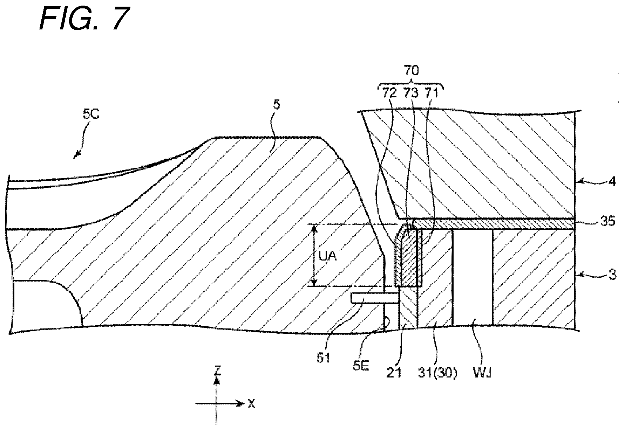

As will be described below with reference to Fig. 7, the upper end region of the cylinder inner wall surface 2S, in which the coat layer 700 is arranged, is a region where a top ring of the piston 5 does not reach even at a crank angle of compression top dead center. Accordingly, such an upper end region is a surface that always opposes the combustion chamber 6 and are exposed to the combustion gas, and a temperature thereof is raised to the high temperature. In such an upper end region of the cylinder inner wall surface 2S, heat transfer to the base material for the cylinder block 3 is accelerated. Thus, it is necessary to take a measure to suppress the cooling loss. As such a measure, the coat layer 700 is provided.

The heat-shielding layer 720 that covers the cylinder inner wall surface 2S is a layer with the low thermal conductivity, and a temperature thereof varies depending on an inside temperature of the combustion chamber 6. Accordingly, when a temperature difference between the temperature of the combustion gas in the combustion chamber 6 and a surface temperature of the cylinder inner wall surface 2S is reduced, the heat transfer to the cylinder block 3 can be blocked to a certain extent. Thus, the cooling loss can be reduced to a certain extent. Meanwhile, in general, the heat-shielding layer 720 is a thin layer that is formed from a material with low volume specific heat. Thus, the heat-shielding layer 720 has a poor heat storage function, cannot block the heat transfer to the cylinder block 3 completely, and thus cannot reduce the cooling loss sufficiently.

For such reasons, the heat-insulating layer 710 is arranged on a back surface side of the heat-shielding layer 720. That is, in the comparative example, the upper end region of the cylinder inner wall surface 2S is covered with two layers of the heat-insulating layer 710 and the heat-shielding layer 720 on top thereof. The heat-insulating layer 710 stores the heat that has passed the heat-shielding layer 720. Accordingly, the heat-insulating layer 710 heats (keeps the temperature of) the heat-shielding layer 720 that covers the upper end region of the cylinder inner wall surface 2S. As a result, the surface temperature of the upper end region of the cylinder inner wall surface 2S is raised to the high temperature, and thus the temperature difference from the combustion gas in the combustion chamber 6 can be reduced. In other words, the heat-insulating layer 710 blocks the heat transfer to the cylinder block 3 from the combustion chamber 6 side and thereby suppresses heat dissipation. As a result, the cooling loss can significantly be reduced.

However, from the research conducted by the present inventors, it was found that the following problem possibly occurred to the coat layer 700 with a two-layer structure. In the case where the temperature on the inside of the combustion chamber 6 is not increased to the relatively high temperature, for example, in the case where the HCCI combustion is conducted by using the lean air-fuel mixture in the low-load operation range, the coat layer 700 in the comparative example functions efficiently. That is, the heat-insulating layer 710 has an adequate heat storage temperature and heats the heat-shielding layer 720 adequately. As a result, the surface temperature of the cylinder inner wall surface 2S can reach such a temperature that is suited for suppression of the cooling loss.

On the other hand, in the case where the temperature on the inside of the combustion chamber 6 is increased to the relatively high temperature, the heat-insulating layer 710 that stores the high temperature excessively heats the heat-shielding layer 720. For example, in the middle-load operation range, the engine body 1 conducts the HCCI combustion by using the lean air-fuel mixture, and in the high-load operation range, the engine body 1 conducts the SI combustion with λ = 1. A fuel injection amount is relatively large in middle-load to high-load operation. Thus, the temperature of the combustion gas in the combustion chamber 6 is relatively increased. As a result, the cylinder inner wall surface 2S receives the high temperature, and the heat-insulating layer 710 stores the heat at the high temperature. Since such a heat-insulating layer 710 heats the heat-shielding layer 720, the surface temperature of the cylinder inner wall surface 2S is significantly increased.

Fig. 3B is a view illustrating a phenomenon that possibly occurs in the middle-load to high-load operation in the combustion chamber structure in which the coat layer 700 in the comparative example is applied to the upper end region of the cylinder inner wall surface 2S. When the heat-insulating layer 710 stores the high heat, and the heat-shielding layer 720 is heated by such heat, the temperature of the cylinder inner wall surface 2S (the heat-shielding layer 720) is raised to the high temperature. The cylinder inner wall surface 2S, which is heated to the excessively high temperature, produces heat for heating the combustion chamber 6 as indicated by arrows H and excessively raises an in-cylinder temperature. Consequently, the temperature of the air that is introduced into the combustion chamber 6 in the intake stroke is increased. Then, when the heated air is compressed in a compression stroke, preignition PIG occurs. That is, such a phenomenon occurs that the air-fuel mixture is partially ignited at earlier timing than original compression ignition timing. In this case, defects such as fluctuations, reduced output, and the like of torque of the engine body 1 possibly occur.

### [Exemplification of Combustion Chamber Structure According to This Embodiment]

In this embodiment, the combustion chamber structure capable of suppressing occurrence of the preignition PIG, which is illustrated in Fig. 3B, while reducing the cooling loss to the block body 30 of the cylinder block 3 through the cylinder inner wall surface 2S is provided.

### <First Embodiment>

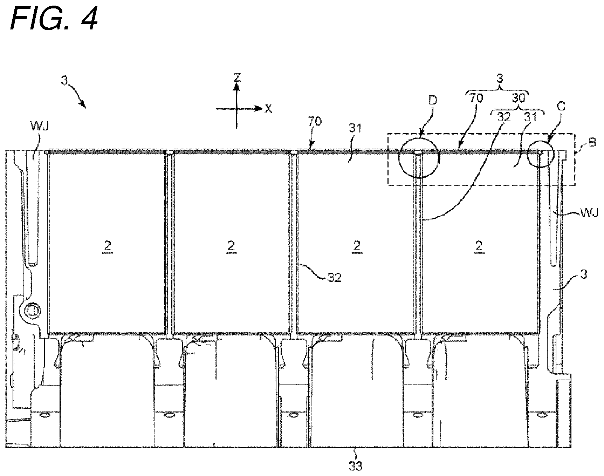

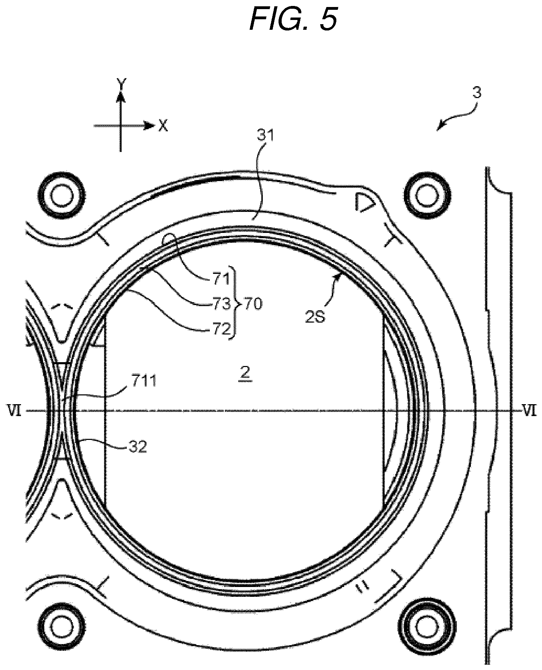

Fig. 4 is a view illustrating a combustion chamber structure according to the first embodiment, and is a cross-sectional view that is taken along line IV-IV in Fig. 2. Fig. 5 is an enlarged view of a section surrounded by a broken line A in Fig. 2. Fig. 6 is an enlarged view of a section surrounded by a broken line B in Fig. 4, and is a cross-sectional view that is taken along line VI-VI in Fig. 5. As illustrated in Fig. 2, the cylinder block 3 includes: the block body 30 having the cylinder inner wall surface 2S that defines a part of the combustion chamber 6; and the coat layer 70 that is arranged to cover an upper end region of the cylinder inner wall surface 2S.

The block body 30 particularly includes: the intermediate wall 32 that is positioned between the two adjacent cylinders 2; and the peripheral wall 31 that forms a wall surface other than the intermediate wall 32 in each of the cylinders 2. A lower block 33 is formed under a portion in which the four cylinders 2 are aligned (Fig. 4). As illustrated in Fig. 6, a coolant passage 34 that extends in the Y-direction is provided in the intermediate wall 32. Since the intermediate wall 32 receives the heat from the two adjacent cylinders 2, the intermediate wall 32 is a wall, a temperature of which is likely to be raised to the high temperature. For this reason, a coolant for a water jacket that is provided in the engine body 1 flows through the coolant passage 34 to cool the intermediate wall 32.

Fig. 7 is a cross-sectional view illustrating the region, in which the coat layer 70 is formed, in the cylinder inner wall surface 2S. The upper surface of the cylinder block 3 and the lower surface of the cylinder head 4 are joined to each other via a gasket 35 to form the hermitically-sealed combustion chamber 6. The coat layer 70 is provided for an entire length in the circumferential direction of an upper end region UA of the cylinder inner wall surface 2S. Fig. 7 illustrates the piston 5 that has moved to top dead center.

A piston ring 51 for hermitically sealing the combustion chamber 6 is held by a side circumferential surface 5E of the piston 5. This piston ring 51 is the top ring that is fitted to the highest position in the piston 5. The upper end region UA is a region where the piston ring 51 does not slidingly contact the cylinder inner wall surface 2S even when the piston 5 reaches the top dead center. The cylindrical liner 21 is fitted to a portion, which is positioned below this upper end region UA, in the cylinder inner wall surface 2S. The piston ring 51 slides on an inner circumferential surface of the liner 21. In other words, the upper end region UA is outside of the movable of the piston ring 51. The upper end region UA may be between the liner 21 and the cylinder head 4 in the cylinder axis direction Z.

The coat layer 70 particularly includes: the heat-insulating layer 71 and the heat-shielding layer 72 that are also described in the comparative example; and a heat diffusion layer 73 that is not provided in the comparative example. The heat-shielding layer 72 is particularly arranged to cover an entire circumference of the upper end region UA of the cylinder inner wall surface 2S. The heat-shielding layer 72 is the outermost layer in the coat layer 70, and is exposed to the combustion chamber 6. The heat-insulating layer 71 is particularly arranged on the back surface side of the heat-shielding layer 72 (the cylinder inner wall surface 2S side), and is similarly arranged for the entire circumference of the upper end region UA. That is, the heat-insulating layer 71 is particularly arranged in the region, which is covered with the heat-shielding layer 72, in the cylinder inner wall surface 2S. The heat diffusion layer 73 is arranged between the heat-insulating layer 71 and the heat-shielding layer 72. That is, in the upper end region UA, the intermediate wall 32 and the peripheral wall 31 are particularly covered with the three layers of the heat-insulating layer 71, the heat-shielding layer 72, and the heat diffusion layer 73.

Relationships of the thermal conductivity among the components of the coat layer 70 are as follows. The heat-insulating layer 71 is formed from a material with the lower thermal conductivity than the block body 30. The heat-shielding layer 72 is formed from a material with the lower thermal conductivity than the block body 30 and the heat-insulating layer 71. The heat diffusion layer 73 is formed from a material with the higher thermal conductivity than the heat-insulating layer 71 and the heat-shielding layer 72. In other words, the thermal conductivity of the heat-insulating layer 71 is lower than the thermal conductivity of the block body 30. The thermal conductivity of the heat-shielding layer 72 is lower than the thermal conductivity of the block body 30 and the thermal conductivity of the heat-insulating layer 71. The thermal conductivity of the heat diffusion layer 73 is higher than the thermal conductivity of the heat-insulating layer 71 and the thermal conductivity of the heat-shielding layer 72.

The heat-insulating layer 71 particularly has a specified thickness in a radial direction of the cylinder 2, and has a ring shape that surrounds the cylinder 2 in a plan view in the cylinder-axis direction (the Z-direction). The thickness of the heat-insulating layer 71 in the radial direction can be selected from a range of 1 mm to 6 mm, or about 1 mm to about 6 mm, for example. Depending on a width of the above-described upper end region UA, a width of the heat-insulating layer 71 in the cylinder-axis direction can be set to approximately 3 mm to 10 mm.

From a perspective of suppressing release of the heat from the combustion chamber 6 through the cylinder block 3 (suppressing the cooling loss), the thermal conductivity of the heat-insulating layer 71 is desirably as low as possible, and the material, the thermal conductivity is at least lower than that for the block body 30, is used. In addition, from a perspective of maintaining the temperature of the upper end region UA of the cylinder inner wall surface 2S to the high temperature, the heat-insulating layer 71 desirably has as high volume specific heat as possible, that is, desirably has the superior heat storage property.

In an aspect that one surface is particularly exposed to the combustion chamber 6 while the back surface is held onto the heat diffusion layer 73, the heat-shielding layer 72 is arranged to cover the entire circumference of the upper end region UA of the cylinder inner wall surface 2S. From a perspective of suppressing dissipation of the heat received by the upper end region UA through the block body 30, the thermal conductivity of the heat-shielding layer 72 is set to be lower than those of the block body 30 and the heat-insulating layer 71. By providing the heat-shielding layer 72, the temperature difference between the combustion gas, which is produced in the combustion chamber 6, and the upper end region UA can be reduced, and the cooling loss can thereby be reduced. A thickness of the heat-shielding layer 72 in the cylinder radial direction can be selected from a range of 0.03 mm to 0.25 mm, or about 0.03 mm to about 0.25 mm, for example.

The heat diffusion layer 73 is particularly arranged between the heat-insulating layer 71 and the heat-shielding layer 72 such that a surface thereof on the combustion chamber 6 side contacts the heat-shielding layer 72 and that an opposing surface therefrom contacts the heat-insulating layer 71. As a result, the heat diffusion layer 73 is also arranged to cover the entire circumference of the upper end region UA of the cylinder inner wall surface 2S.

The heat diffusion layer 73 is a layer that has a function of releasing the heat stored in the heat-insulating layer 71 to the cylinder block 3 so as to prevent the temperature of the upper end region UA, in which the heat-insulating layer 71 is arranged, in the cylinder inner wall surface 2S from being raised to the excessively high temperature. From a perspective of immediately transferring the heat stored in the heat-insulating layer 71 to the cylinder block 3, the thermal conductivity of the heat diffusion layer 73 is desirably as high as possible. Accordingly, the heat diffusion layer 73 is set as a layer equipped with the higher thermal conductivity than the heat-insulating layer 71 and the heat-shielding layer 72. A thickness of the heat diffusion layer 73 in the cylinder radial direction can be selected from a range of 1 mm to 5 mm, for example. Here, in a point of favorable heat diffusion, the heat diffusion layer 73 is desirably a layer with thermal resistance, which is expressed by "thermal conductivity/thickness", as low as possible. For this reason, the thickness of the heat diffusion layer 73 is set in consideration of the thermal conductivity of the material to be used.

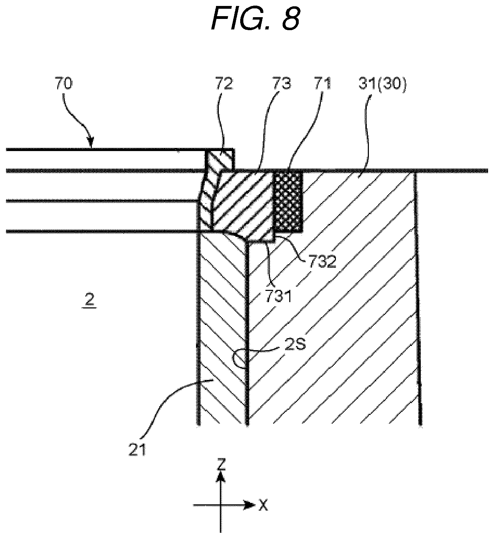

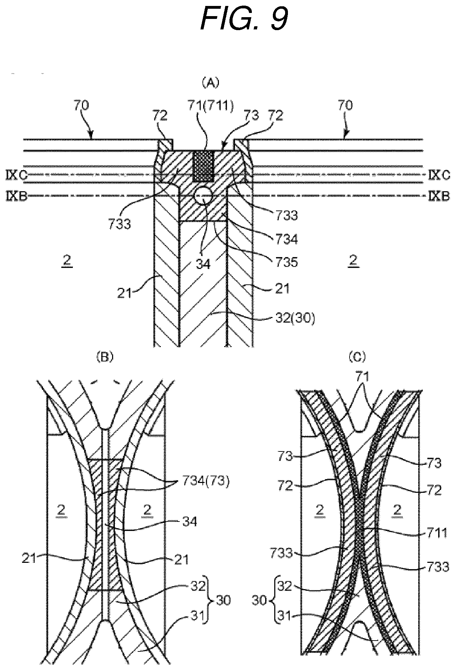

Next, a detailed description will be made on a cross-sectional shape of the coat layer 70 on the peripheral wall 31 and the intermediate wall 32 of the block body 30. Fig. 8 is an enlarged view of a section C in Fig. 4. Fig. 9A is an enlarged view of a section D in Fig. 4, Fig. 9B is a cross-sectional view that is taken along line IXB-IXB in Fig. 9A, and Fig. 9C is a cross-sectional view that is taken along line IXC-IXC in Fig. 9A. Fig. 8 illustrates the cross-sectional shape of the coat layer 70 on the peripheral wall 31 of the block body 30, and Fig. 9A illustrates the cross-sectional shape of the coat layer 70 on the intermediate wall 32.

With reference to Fig. 8, in the peripheral wall 31, the heat diffusion layer 73 particularly includes a side end edge 731 and an extending portion 732, each of which serves as an abutment portion that directly abuts the block body 30. The side end edge 731 is a lower end edge of the heat diffusion layer 73 in the cylinder-axis direction. The extending portion 732 is a portion that extends downward in the cylinder-axis direction from the lower end edge of the heat-insulating layer 71. These side end edge 731 and extending portion 732 are portions, each of which directly contacts the block body 30 without being hampered by the heat-insulating layer 71.

The heat diffusion layer 73 receives the heat that is excessively stored in the heat-insulating layer 71 and dissipates this heat from the side end edge 731 and the extending portion 732 to the block body 30. That is, the side end edge 731 and the extending portion 732 each function as a heat dissipating portion. The heat diffusion layer 73 may have the same width as the heat-insulating layer 71 by omitting the extending portion 732, and the side end edge 731 may only be the portion that contacts the block body 30. However, the provision of the extending portion 732 is preferred because a contact area between the heat diffusion layer 73 and the block body 30 is increased, which promotes release of the heat in the heat-insulating layer 71 to the block body 30.

A lower end edge of the heat-shielding layer 72 and the lower end edge of the heat-insulating layer 71 are particularly present at the substantially same position. That is, in the coat layer 70 with the three-layer structure, only the extending portion 732 of the heat diffusion layer 73 is projected downward. Meanwhile, an upper end edge of the heat-insulating layer 71 and an upper end edge of the heat diffusion layer 73 are flush. On the contrary, an upper end of the heat-shielding layer 72 is projected upward from the upper end of the heat diffusion layer 73 and slightly extends to the radially outer side to cover a part of the upper end surface of the heat diffusion layer 73.

Further particularly, with reference to Figs. 9A to 9C, an aspect of the coat layer 70 on the intermediate wall 32 differs from that on the peripheral wall 31. First, the heat-insulating layer 71 is formed with a meeting portion 711 in the intermediate wall 32. The meeting portion 711 is a portion where, of the two adjacent cylinders 2, the heat-insulating layer 71 that is applied to one of the cylinder 2 and the heat-insulating layer 71 that is applied to the other cylinder 2 meet. Needless to say, the meeting portion 711 may not be provided, and the heat-insulating layers 71 for the two adjacent cylinders 2 may also be formed separately on the intermediate wall 32.

Next, the heat diffusion layer 73 particularly includes a heat receiving portion 733, a heat dissipating portion 734, and a lower end surface 735 (the abutment portion) in the intermediate wall 32. The heat receiving portion 733 is a portion that is interposed between the heat-insulating layer 71 and the heat-insulating layer 71 (the meeting portions 711) of the two adjacent cylinders 2. The heat dissipating portion 734 is a portion that extends downward from a lower end of the heat receiving portion 733. The heat dissipating portion 734 is a portion in which the one heat diffusion layer 73 and the other heat diffusion layer 73 of the two adjacent cylinders 2 meet and are integrated.

In addition, the heat dissipating portion 734 particularly covers a portion around the coolant passage 34, which penetrates the intermediate wall 32. As illustrated in Fig. 9B, an inlet portion and an outlet portion of the coolant passage 34 are each defined by the intermediate wall 32 while an intermediate portion thereof is defined by the heat diffusion layer 73. In this way, heat exchange between the heat possessed by the heat diffusion layer 73 and the coolant flowing through the coolant passage 34 can occur.

The lower end surface 735 is a portion that particularly serves as the abutment portion in which the intermediate wall 32 (the block body 30) and the heat diffusion layer 73 directly abut each other. The lower end surface 735 is the lower end surface of the above-described heat dissipating portion 734, and has the same width as the intermediate wall 32 in the radial direction. The lower end surface 735 contacts an upper end surface of the intermediate wall 32. Thus, the heat diffusion layer 73 can dissipate the heat received from the heat-insulating layer 71 to the intermediate wall 32 via the lower end surface 735. Furthermore, the heat diffusion layer 73 can dissipate the received heat to the coolant, which flows through the coolant passage 34, through the heat dissipating portion 734. Thus, the intermediate wall 32, the temperature of which is easily raised excessively, between the cylinders 2 can be maintained at the appropriate temperature.

A description will be made on operation of the coat layer 70 with the three-layer structure as described so far. The heat-shielding layer 72 is the layer with the extremely low thermal conductivity, and the temperature thereof varies depending on the inside temperature of the combustion chamber 6. Accordingly, in the upper end region UA of the cylinder inner wall surface 2S, the heat-shielding layer 72 can significantly block the heat transfer from the combustion gas in the combustion chamber 6 to the block body 30. In this way, the cooling loss can be reduced. However, since the heat-shielding layer 72 cannot block the heat transfer completely, the heat passes through the heat-shielding layer 72 to a certain extent. In this embodiment, since the heat-insulating layer 71 is formed from a member with the high volume specific heat, the heat-insulating layer 71 exhibits the superior heat storage function. Accordingly, the heat that has passed through the heat-shielding layer 72 and the heat in a surrounding area are stored in the heat-insulating layer 71.

Then, the heat-insulating layer 71 that keeps the heat heats the heat-shielding layer 72. As a result, the upper end region UA, in which the heat-insulating layer 71 is arranged, can be maintained to the high temperature. However, as described in the above-described comparative example, when the temperature of the combustion gas falls within the relatively high operation range, the heat-insulating layer 71 stores the high heat. As a result, the heat-shielding layer 72 is excessively heated, which causes the preignition. In order to prevent such a defect, the heat diffusion layer 73 is arranged between the heat-insulating layer 71 and the heat-shielding layer 72 to receive the heat from the heat-insulating layer 71. The heat that is received by the heat diffusion layer 73 from the heat-insulating layer 71 is dissipated from the side end edge 731 and the extending portion 732 in the peripheral wall 31 to the peripheral wall 31 (the block body 30). In addition, in the intermediate wall 32, the heat diffusion layer 73 can dissipate the received heat from the heat dissipating portion 734 to the coolant passage 34 and from the lower end surface 735 to the intermediate wall 32. Thus, it is possible to prevent the occurrence of the preignition in advance while preventing the excessive temperature rise of upper end region UA of the cylinder inner wall surface 2S to the high temperature.

Next, a description will be made on material examples that can favorably be used as components of the combustion chamber 6. As a base material for the cylinder block 3 and a base material for the cylinder head 4, a cast product that is made from a metal base material such as an aluminum alloy AC4B (thermal conductivity = 96 W/mK, volume specific heat = 2667 kJ/m³K). In addition, as a base material for the piston 5, an aluminum alloy AC8A (thermal conductivity = 125 W/mk, volume specific heat = 2600 kJ/m³K) can be used.

As the base material for the intake valve 11 and the exhaust valve 12, heat-resisting steel with superior heat resistance, superior wear resistance, and superior corrosion resistance can be used. For example, as the base material for the intake valve 11, martensitic heat-resisting steel SUH11 that contains chromium, silicone, and carbon as bases (thermal conductivity = 25 W/mK, volume specific heat = 3850 kJ/m³K) can be used. In addition, as the base material for the exhaust valve 12, austenitic heat-resisting steel SUH35 that contains chromium, nickel, and carbon as bases (thermal conductivity = 18 W/mK, volume specific heat = 3565 kJ/m³K) can be used.

For the heat-shielding layer 72, of the components (the block body 30, the heat-insulating layer 71, the heat-shielding layer 72, and the heat diffusion layer 73) of the cylinder block 3, the material with the lowest thermal conductivity and the lowest volume specific heat is selected. That is, the constituent material for the heat-shielding layer 72 is selected such that the heat-shielding layer 72 becomes the layer from which the heat dissipation is less likely to occur and where the heat is less likely to be stored. A preferable range of the thermal conductivity of the heat-shielding layer 72 is about 0.05 to 1.50 W/mK, and a preferable range of the volume specific heat thereof is about 500 to 1500 kJ/m³K.

As the material that can satisfy the above conditions for the heat-shielding layer 72, the heat-resistant silicone resin can be exemplified. An example of the silicone resin is a silicone resin that contains a three-dimensional polymer with a high branching degree, and representative examples of such a silicone resin are a methyl silicone resin and a methylphenyl silicone resin. For example, polyalkylphenylsiloxane or the like is preferred. Such a silicone resin may contain a hollow particle such as a shirasu balloon. For example, the heat-shielding layer 72 can be formed by subjecting the upper end region UA, which is formed with the heat-insulating layer 71 and the heat diffusion layer 73, in the cylinder inner wall surface 2S into coating treatment using the above silicone resin.

The heat-insulating layer 71 is the layer, the heat diffusion from which is less likely to occur, and which easily stores the heat. In order to suppress the heat diffusion, for the heat-insulating layer 71, a material with the thermal conductivity that is higher than the heat-shielding layer 72 but is much lower than the block body 30 is selected. In addition, in order to have the favorable heat storage property, for the heat-insulating layer 71, a material with the higher volume specific heat and the higher thermal resistance than the heat-shielding layer 72 is selected. A preferable range of the thermal conductivity of the heat-insulating layer 71 is about 0.2 to 10 W/mK, and a preferable range of the volume specific heat thereof is about 1800 to 3500 kJ/m³K.

As the material that can satisfy the above conditions for the heat-insulating layer 71, a ceramic material can be exemplified. In general, the ceramic material has the low thermal conductivity, the high volume specific heat, and the superior heat resistance. Thus, the ceramic material is preferred as the heat-insulating layer 71. More specifically, the preferred ceramic material is zirconia (thermal conductivity = 3 W/mK, volume specific heat = 2576 kJ/m₃K). In addition thereto, the ceramic material such as silicon nitride, silica, cordierite, or mullite, a porous SUS-based material, calcium silicate, or the like can also be used as a constituent material for the heat-insulating layer 71.

The heat diffusion layer 73 plays a role of dissipating the heat stored in the heat-insulating layer 71 from the extending portion 732 and the like to the block body 30. Thus, the heat diffusion layer 73 is a layer from which the heat is easily diffused. Thus, of the components of the cylinder block 3, the heat diffusion layer 73 is a layer with the highest thermal conductivity. A preferable range of the thermal conductivity of the heat diffusion layer 73 is about 35 to 600 W/mK. In addition, the thickness of the heat diffusion layer 73 is desirably set such that the thermal resistance falls within a range from 0.002 to 0.06 m²K/W. As the material, which satisfies the above conditions, for the heat diffusion layer 73, for example, a copper-based material (thermal conductivity = 400 W/mK, volume specific heat = 3500 kJ/m³K), a corson alloy, beryllium copper, a fiber-reinforced aluminum alloy, a titanium aluminum, or the like can be used. In the case where the copper-based material is used, and even in the case where a thickness thereof is set to 2 mm, the heat diffusion layer 73 can have the thermal resistance = 0.005 m²K/W and thus is particularly preferred.

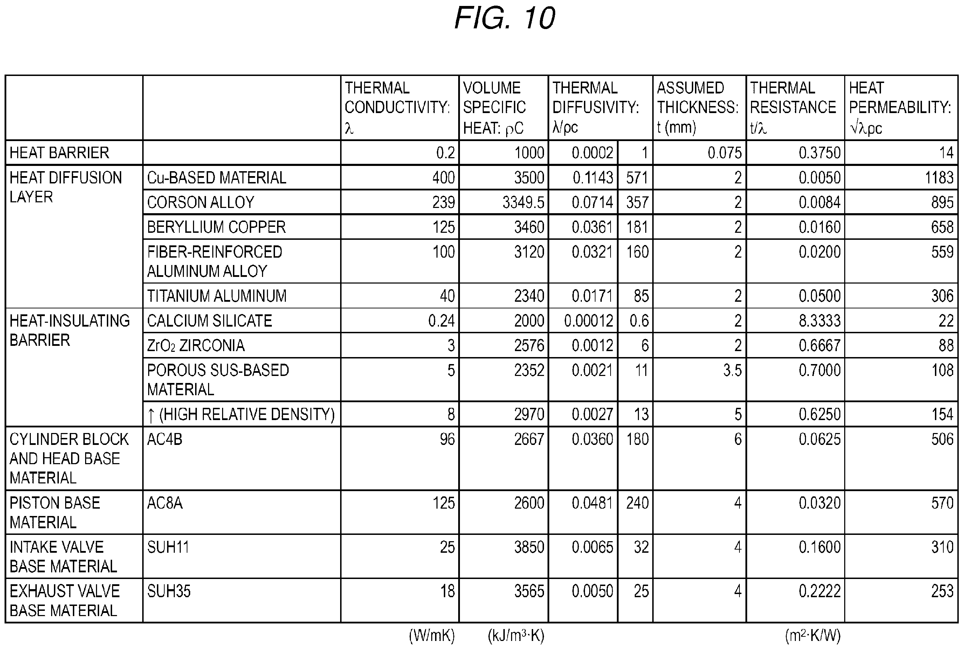

Fig. 10 illustrates preferable material selection examples of the base material for the intake valve 11 and the exhaust valve 12, the base material for the cylinder block 3, the cylinder head 4, and the piston 5, the heat-insulating layer 71, the heat-shielding layer 72, and the heat diffusion layer 73. Fig. 10 illustrates thermal conductivity A, volume specific heat pc, thermal diffusivity (λ/ρc), a Z-direction thickness t, thermal resistance (t/λ), and heat permeability (√λρc). A small row on a right side in the thermal diffusivity shows a ratio in each layer in the case where the thermal diffusivity of the heat-shielding layer 72 is set to "1".

### <Second Embodiment>

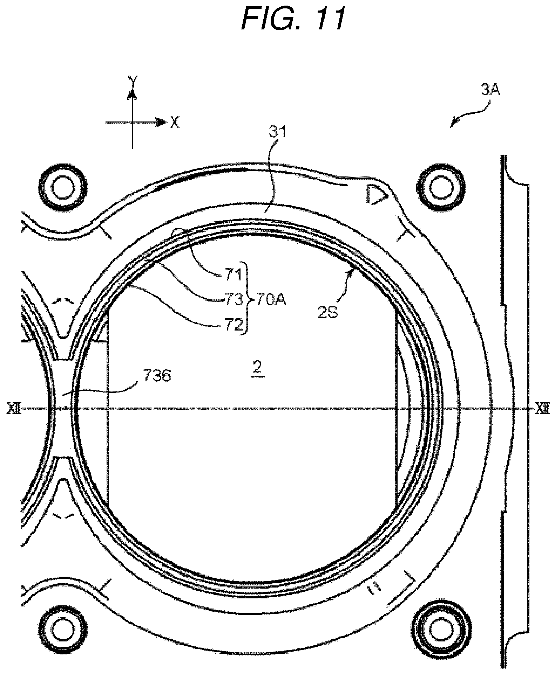

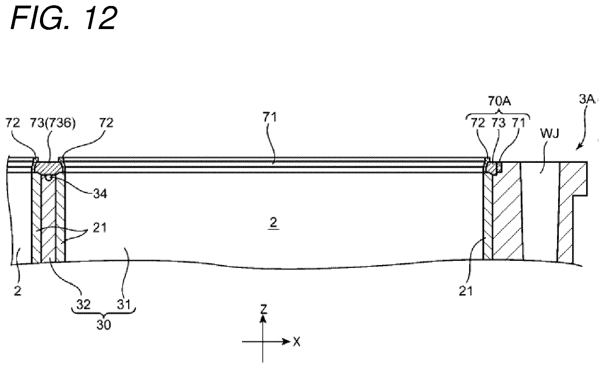

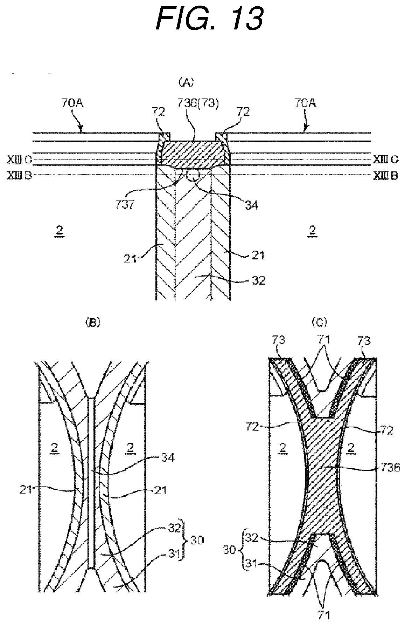

In a combustion chamber structure according to a second embodiment, an example in which the heat-insulating layer 71 is not provided in the intermediate wall 32 will be described. Fig. 11 is a top view of a cylinder block 3A that includes a coat layer 70A according to the second embodiment. FIG. 12 is a cross-sectional view that is taken along line XII-XII in FIG. 11. Fig. 13A is an enlarged cross-sectional view of a portion of the intermediate wall 32 illustrated in Fig. 12, Fig. 13B is a cross-sectional view that is taken along line XIIIB-XIIIB in Fig. 13A, and Fig. 13C is a cross-sectional view that is taken along line XIIIC-XIIIC in Fig. 13A.

The coat layer 70A includes the heat-shielding layer 72 that is arranged to cover the entire circumference of the upper end region UA of the cylinder inner wall surface 2S (see Fig. 7). Such a basic configuration that the heat-insulating layer 71 is arranged on the back surface side (the cylinder inner wall surface 2S side) of the heat-shielding layer 72 and that the heat diffusion layer 73 is arranged between the heat-insulating layer 71 and the heat-shielding layer 72 is the same as that in the first embodiment. In addition, since a structure of the coat layer 70A in the peripheral wall 31 is the same as the structure, which has been illustrated above in Fig. 8, a description thereon will not be made.

The structure of the coat layer 70A in the intermediate wall 32 particularly differs from that in the first embodiment. The coat layer 70A in the intermediate wall 32 is not equipped with the heat-insulating layer 71. More specifically, the cylinder block 3A has such a structure that, in the circumferential direction of the cylinder inner wall surface 2S, the two layers of the heat-shielding layer 72 and the heat diffusion layer 73 are arranged in the region of the intermediate wall 32 and the three layers of the heat-shielding layer 72, the heat-insulating layer 71, and the heat diffusion layer 73 are arranged in the peripheral wall 31 as the region other than the intermediate wall 32.

Each of the heat-insulating layers 71 between the two adjacent cylinders 2 is not formed with the meeting portion 711 as described in the first embodiment, and has an end edge portion near the end portion in the circumferential direction of the intermediate wall 32. That is, the heat-insulating layer 71 is not provided at and near a position where the two adjacent cylinders 2 approach each other the most. Thus, such an aspect that the heat-shielding layers 72 for the adjacent cylinders 2 oppose each other with the heat diffusion layer 73 being interposed therebetween.

Meanwhile, in the intermediate wall 32, the heat diffusion layer 73 has a meeting portion 736 where the heat diffusion layers 73 of the two adjacent cylinders 2 are integrated. Meanwhile, the heat diffusion layer 73 in the second embodiment is not equipped with a portion that extends downward like the heat dissipating portion 734 in the first embodiment. A lower end surface 737 (an abutment portion) of the meeting portion 736 abuts the upper end surface of the intermediate wall 32 and also abuts the coolant passage 34. That is, the lower end surface 737 defines a part of the coolant passage 34. Thus, the lower end surface 737 can dissipate the heat received by the heat diffusion layer 73 to the intermediate wall 32 and the coolant in the coolant passage 34.

The intermediate wall 32 is a wall, the temperature of which is naturally raised to the high temperature due to the heat from the two adjacent cylinders 2. The heat-shielding layer 72 that is arranged on a surface of such an intermediate wall 32 is naturally maintained at the high temperature. In this way, it is possible to adopt the combustion chamber structure having functions of maintaining the heat and dissipating the heat according to actual heat distribution in the cylinder block 3A by forming the coat layer 70A that has the two-layer coat of the heat-shielding layer 72 and the heat diffusion layer 73 without providing the heat-insulating layer 71 in the region of the intermediate wall 32 and has the three-layer coat including the heat-insulating layer 71, the heat-shielding layer 72, and the heat diffusion layer 73 in the peripheral wall 31.

### <Third Embodiment>

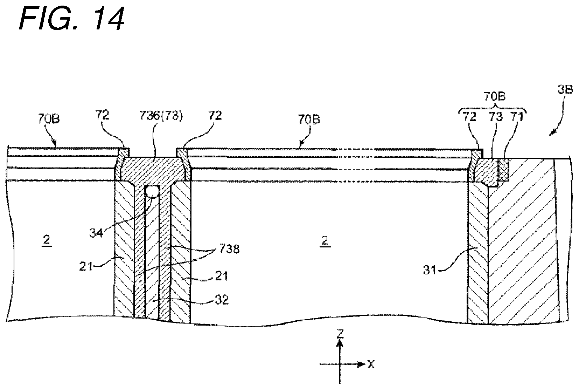

Fig. 14 is a cross-sectional view of a cylinder block 3B that includes a coat layer 70B according to a third embodiment. A basic structure of the coat layer 70B is the same as that of the coat layer 70A in the second embodiment. The two layers of the heat-shielding layer 72 and the heat diffusion layer 73 are arranged on the intermediate wall 32, and the three layers of the heat-shielding layer 72, the heat-insulating layer 71, and the heat diffusion layer 73 are arranged on the peripheral wall 31.

The coat layer 70B differs from the coat layer 70A in the second embodiment in a point that the heat diffusion layer 73 particularly includes a downward extending portion 738 (an abutment portion) in the intermediate wall 32. The downward extending portion 738 is a portion that is arranged as a pair on the one cylinder 2 side and the other cylinder 2 side and extends downward for a significant length from the lower end of the meeting portion 736. The pair of the downward extending portions 738 particularly extends downward in a manner to hold the coolant passage 34 therebetween. While one surface of the downward extending portion 738 contacts the back surface of the liner 21, another surface thereof contacts the intermediate wall 32 and thereby serves as the abutment portion with respect to the intermediate wall 32.

A degree that the downward extending portion 738 extends below the intermediate wall 32 is significantly greater than the degree of the extending portion 732 in the peripheral wall 31. Accordingly, in the region of the intermediate wall 32, the heat diffusion layer 73 in the third embodiment has such a shape that a contact area of the abutment portion (the downward extending portion 738) with respect to the block body 30 is larger than that in the peripheral wall 31. According to this combustion chamber structure, it is possible to improve heat dissipation ability of the abutment portion in the region of the intermediate wall 32. Thus, the intermediate wall 32, the temperature of which is easily raised excessively, between the cylinders 2 can be maintained at the appropriate temperature.

### [Description of Reference Signs and Numerals]

1 engine body
2 cylinder
3 cylinder block
30 block body
31 peripheral wall (region other than intermediate wall)
32 intermediate wall
34 coolant passage
4 cylinder head
5 piston
51 piston ring
6 combustion chamber
71 heat-insulating layer
72 heat-shielding layer
73 heat diffusion layer
731 side end edge (abutment portion)
732 extending portion (abutment portion)
734 heat dissipating portion
735, 737 lower end surface (abutment portion)
738 downward extending portion (abutment portion)
PIG preignition
UA upper end region

## Claims

1. A combustion chamber structure for an engine comprising:
a combustion chamber (6) that is defined by a cylinder block (3), a cylinder head (4), and a piston (5), wherein the cylinder block (3) includes a block body (30) having a cylinder inner wall surface (2S) that opposes the combustion chamber (6);
a heat-shielding layer (72) that is configured to at least cover an upper end region (UA) of the cylinder inner wall surface (2S), a piston ring (51) held by a side circumferential surface of the piston (5) not slidingly contacting the upper end region (UA);
a heat-insulating layer (71) that is arranged in a region, which is covered with the heat-shielding layer (72), in the cylinder inner wall surface (2S); and
a heat diffusion layer (73) that is arranged between the heat-insulating layer (71) and the heat-shielding layer (72),
wherein
a thermal conductivity of the heat-insulating layer (71) is lower than that of the block body (30),
a thermal conductivity of the heat-shielding layer (72) is lower than those of the block body (30) and the heat-insulating layer (71),
a thermal conductivity of the heat diffusion layer (73) is higher than those of the heat-insulating layer (71) and the heat-shielding layer (72), and
the heat diffusion layer (73) includes an abutment portion (731, 732; 735; 737; 738) that is configured to abut the block body (30).

2. The combustion chamber structure for the engine according to claim 1, wherein
the heat diffusion layer (73) includes an extending portion (732; 738) that extends in a cylinder-axis direction (Z) from the heat-insulating layer (71), and
the extending portion (732; 738) is the abutment portion (732; 738) that is configured to abut the block body (30) .

3. The combustion chamber structure for the engine according to claim 1 or 2, wherein
the heat-insulating layer (71) and the heat diffusion layer (73) are provided for an entire length in a circumferential direction of the cylinder inner wall surface (2S) .

4. The combustion chamber structure for the engine according to any one of the preceding claims, wherein
the cylinder block (3) includes plural cylinders (2) that are aligned in a specified direction (X), and
an intermediate wall (32) is provided between the adjacent cylinders (2).

5. The combustion chamber structure for the engine according to claim 4, wherein
in the circumferential direction of the cylinder inner wall surface (2S), two layers of the heat-shielding layer (72) and the heat diffusion layer (73) are arranged in a region of the intermediate wall (32), and three layers of the heat-shielding layer (72), the heat-insulating layer (71), and the heat diffusion layer (73) are arranged in a region (31) other than the intermediate wall (32).

6. The combustion chamber structure for the engine according to claim 4 or 5, wherein
a coolant passage (34) is provided in the intermediate wall (32), and
the heat diffusion layer (73) includes a heat dissipating portion (734) that covers a periphery of the coolant passage (34).

7. The combustion chamber structure for the engine according to any one of claims 4 to 6, wherein
the heat diffusion layer (73) has such a shape that, in the region of the intermediate wall (32), a contact area of the abutment portion (731, 732; 735; 737; 738) with respect to the block body (30) is larger than that in the region (31) other than the intermediate wall (32).

8. A cylinder block (3) for an engine having a combustion chamber (6) that is defined by the cylinder block (3), a cylinder head (4), and a piston (5), the cylinder block (3) comprising:
a block body (30) having a cylinder inner wall surface (2S) configured to oppose the combustion chamber (6);
a heat-shielding layer (72) configured to at least cover an end region (UA) of the cylinder inner wall surface (2S) ;
a heat-insulating layer (71) that is arranged in a region, which is covered with the heat-shielding layer (72), in the cylinder inner wall surface (2S); and
a heat diffusion layer (73) that is arranged between the heat-insulating layer (71) and the heat-shielding layer (72),
wherein
a thermal conductivity of the heat-insulating layer (71) is lower than a thermal conductivity of the block body (30),
a thermal conductivity of the heat-shielding layer (72) is lower than the thermal conductivity of the block body (30) and the thermal conductivity of the heat-insulating layer (71),
a thermal conductivity of the heat diffusion layer (73) is higher than the thermal conductivity of the heat-insulating layer (71) and the thermal conductivity of the heat-shielding layer (72), and
the heat diffusion layer (73) includes an abutment portion (731, 732; 735; 737; 738) configured to abut the block body (30).

9. An engine comprising:
a cylinder block (3);
a cylinder head (4);
a piston (5); and
a combustion chamber (6) that is defined by the cylinder block (3), the cylinder head (4), and the piston (5),
wherein
the cylinder block (3) includes:
a block body (30) having a cylinder inner wall surface (2S) configured to oppose the combustion chamber (6) ;
a heat-shielding layer (72) configured to at least cover an upper end region (UA) of the cylinder inner wall surface (2S), a piston ring (51) held by a side circumferential surface of the piston (5) not slidingly contacting the upper end region (UA);
a heat-insulating layer (71) that is arranged in a region, which is covered with the heat-shielding layer (72), in the cylinder inner wall surface (2S); and
a heat diffusion layer (73) that is arranged between the heat-insulating layer (71) and the heat-shielding layer (72),
wherein
a thermal conductivity of the heat-insulating layer (71) is lower than a thermal conductivity of the block body (30),
a thermal conductivity of the heat-shielding layer (72) is lower than the thermal conductivity of the block body (30) and the thermal conductivity of the heat-insulating layer (71),
a thermal conductivity of the heat diffusion layer (73) is higher than the thermal conductivity of the heat-insulating layer (71) and the thermal conductivity of the heat-shielding layer (72), and
the heat diffusion layer (73) includes an abutment portion (731, 732; 735; 737; 738) configured to abut the block body (30).

10. The engine according to claim 9, wherein
the heat diffusion layer (73) includes an extending portion (732; 738) that extends in a cylinder-axis direction (Z) from the heat-insulating layer (71), and the extending portion (732; 738) is the abutment portion (732; 738) configured to abut the block body (30).

11. The engine according to claim 9 or 10, wherein
the heat-insulating layer (71) and the heat diffusion layer (73) are provided for an entire length in a circumferential direction of the cylinder inner wall surface (2S) .

12. The engine according to any one of claims 9 to 11, wherein
the cylinder block (3) includes plural cylinders (2) that are aligned in a specified direction (X), and an intermediate wall (32) is provided between the adjacent cylinders (2).

13. The engine according to claim 12, wherein
in the circumferential direction of the cylinder inner wall surface (2S), two layers of the heat-shielding layer (72) and the heat diffusion layer (73) are arranged in a region of the intermediate wall (32), and three layers of the heat-shielding layer (72), the heat-insulating layer (71), and the heat diffusion layer (73) are arranged in a region (31) other than the intermediate wall (32).

14. The combustion chamber structure for the engine according to claim 12 or 13, wherein
a coolant passage (34) is provided in the intermediate wall (32), and
the heat diffusion layer (73) includes a heat dissipating portion (734) that covers a periphery of the coolant passage (34).

15. The combustion chamber structure for the engine according to any one of claims 12 to 14, wherein
the heat diffusion layer (73) has such a shape that, a contact area of the abutment portion (731, 732; 735; 737; 738) with respect to the block body (30) in the region of the intermediate wall (32) is larger than a contact area of the abutment portion (731, 732; 735; 737; 738) with respect to the block body (30) in the region (31) other than the intermediate wall (32).
